# EUROPÄISCHE PATENTSCHRIFT

(11) **EP 0 790 187 B1**
(45) Veröffentlichungstag und Bekanntmachung des Hinweises auf die Patenterteilung: **17.04.2002**
(21) Anmeldenummer: 97100394.2
(22) Anmeldetag: 11.01.1997
(51) Int. Cl.: B65B 19/28, B65B 57/02

(54) **Verfahren und Vorrichtung zur Kontrolle von Zuschnitten oder Banderolen für Zigarettenpackungen**
Process and apparatus for controlling blanks or strapping bands for cigarette packages
Procédé et dispositif de contrôle de flans ou de banderoles pour paquets de cigarettes

(30) Priorität: 19.02.1996 DE 19605882; 16.04.1996 DE 19614920
(43) Veröffentlichungstag der Anmeldung: 20.08.1997
(73) Patentinhaber: Focke & Co. (GmbH & Co.), 27283 Verden (DE)
(72) Erfinder: Focke, Heinz, 27283 Verden (DE); Below, Dietrich, 27412 Bülstedt (DE)
(74) Vertreter: Bolte, Erich, Dipl.-Ing.

(56) Entgegenhaltungen:
- EP-A- 0 330 495
- EP-A- 0 677 444
- US-A- 4 053 056

## Beschreibung

Die Erfindung betrifft ein Verfahren zur Kontrolle von Zuschnitten für Zigarettenpackungen oder von Banderolen auf Zigarettenpackungen, insbesondere auf Klappschachteln, wobei ein Zuschnitt, ein Teil desselben, eine Banderole oder ein Rand und/oder eine Oberfläche des Zuschnitts oder der Banderolle von einem Sensor abgetastet werden und ein dabei gewonnene Sensorsignal einer Auswerteeinheit zugeführt wird.

Klappschachteln sind als Verpackung für Zigaretten sehr verbreitet. Sie werden auch als "Hinge-Lid-Packungen" bezeichnet. Derartige Klappschachteln werden in der Regel aus einem bis auf den Kragen einteiligen Zuschnitt in entsprechenden Verpackungsmaschinen hergestellt. Zur Optimierung des Produktionsablaufs ist es erforderlich, daß der Verpackungsmaschine stets der korrekte Zuschnitt in richtiger Relativposition zugeführt wird. Hierzu muß die Verpackungsmaschine eine schnell arbeitende Zuschnittkontrolle aufweisen, die einerseits bei einem Wechsel des herzustellenden Verpackungstyps die Zufuhr des richtigen Zuschnitts und andererseits dessen richtige Stellung kontrolliert. Gleiches gilt bei der Anbringung von Banderolen auf Zigarettenpackungen.

Der Erfindung liegt demnach das Problem zugrunde, ein schnell und robust arbeitendes Verfahren zur Kontrolle von Zuschnitten für Zigarettenpackungen oder Banderolen auf Zigarettenpackungen sowie eine entsprechende Vorrichtung zu schaffen.

Dieser Problem wird durch das Verfahren gemäß Anspruch 1 gelöst.

Zur Lösung dieses Problems werden Konturen eines Randes und/oder einer Oberfläche des Zuschnitts oder der Banderole abgetastet, das hierbei erfaßte Sensorsignal zur Ermittlung eines Kontursignals gefiltert, anschließend das Kontursignal in digitale Impulse gewandelt und diese Impulse mit einem Referenzwert verglichen. Das erfindungsgemäße Verfahren weist den Vorteil auf, daß nicht das gesamte Bild des Zuschnitts oder der Banderole verarbeitet wird, sondern lediglich dessen Konturen. Hierbei werden die ermittelten Impulse von Hell-Dunkel-Übergängen des Zuschnitts bzw. der Banderole gezählt und sodann mit dem Referenzwert verglichen. Daher kann mit geringem Aufwand in kurzer Zeit der Zuschnitt bzw. die Banderole auf seine entsprechenden Anforderungen hin geprüft werden. Die Leistungsfähigkeit der Verpackungsmaschine wird hierdurch nicht beeinträchtigt.

Vorzugsweise werden Zeilenanfangssignale, die mit Hilfe einer Synchronisationseinheit aus dem Sensorsignal herausgefiltert werden, zwei Steuereinheiten zugeführt. Hierdurch lassen sich rechte und linke vertikale Seiten eines aufzunehmenden Bildes ausblenden. Dies hat den Vorteil, daß ein Abtastbereich an die vertikale Breite des abzutastenden Zuschnitts bzw. Teils desselben angepaßt werden kann. Hierdurch läßt sich die auszuwertende Information stets der Zuschnittgröße anpassen. Die ausgeblendeten Bereiche werden zwar mit erfaßt, jedoch für die Zählung der Impulse gesperrt und damit nicht ausgewertet.

Die erfindungsgemäße Vorrichtung ist gekennzeichnet durch eine Filtereinheit, die dem Sensor, der Konturen eines Randes und/oder einer Oberfläche des Zuchnitts oder der Banderolle abtastet, in Signalflußrichtung nachgeschaltet ist und die aus einem vom Sensor ermittelten Sensorsignal ein Kontursignal herausfiltert, und durch einen Signalwandler, der der Filtereinheit in Signalflußrichtung nachgeschaltet sowie der Auswerteeinheit in Signalflußrichtung vorgeschaltet ist und der das Kontursignal in Impulse wandelt, die in der Auswerteeinheit ausgewertet werden. Die erfindungsgemäße Vorrichtung weist den Vorteil auf, daß sie mit geringem vorrichtungstechnischem Aufwand eine schnell und robust arbeitende Zuschnittkontrolle ermöglicht.

Bevorzugte Weiterbildungen der Erfindung ergeben sich aus den Unteransprüchen und der Beschreibung. Anhand der Zeichnung wird ein bevorzugtes Ausführungsbeispiel der Erfindung näher erläutert. In der Zeichnung zeigen:
- Fig. 1: einen Ausschnitt aus einem Faltrevolver einer Verpackungsmaschine im Bereich einer erfindungsgemäßen Vorrichtung in schematischem Grundriß,
- Fig. 2: einen Querschnitt durch den Faltrevolver gemäß dem Schnitt II-II in Fig. 1,
- Fig. 3: ein Blockschaltbild der erfindungsgemäßen Vorrichtung,
- Fig. 4: einen von einem Sensor abzutastenden Bereich eines Zuschnitts in stark schematisierter Draufsicht,
- Fig. 5: den Bereich des Zuschnitts gemäß Fig. 4 in stark schematisierter Seitenansicht,
- Fig. 6: ein Sensorsignal nach Abtastung des Zuschnittbereichs gemäß Fig. 4 und Fig. 5,
- Fig. 7: ein nach Filterung des Sensorsignals gemäß Fig. 6 gewonnenes Kontursignal,
- Fig. 8: das in digitale Impulse umgewandelte Kontursignal gemäß Fig. 7, und
- Fig. 9: die Impulse gemäß Fig. 8 in einem auszuwertenden Abtastbereich.

Die in der Zeichnung gezeigte Vorrichtung dient der schnellen und robusten Zuschnittkontrolle in einer Verpackungsmaschine für Zigarettenpackungen, nämlich Klappschachteln.

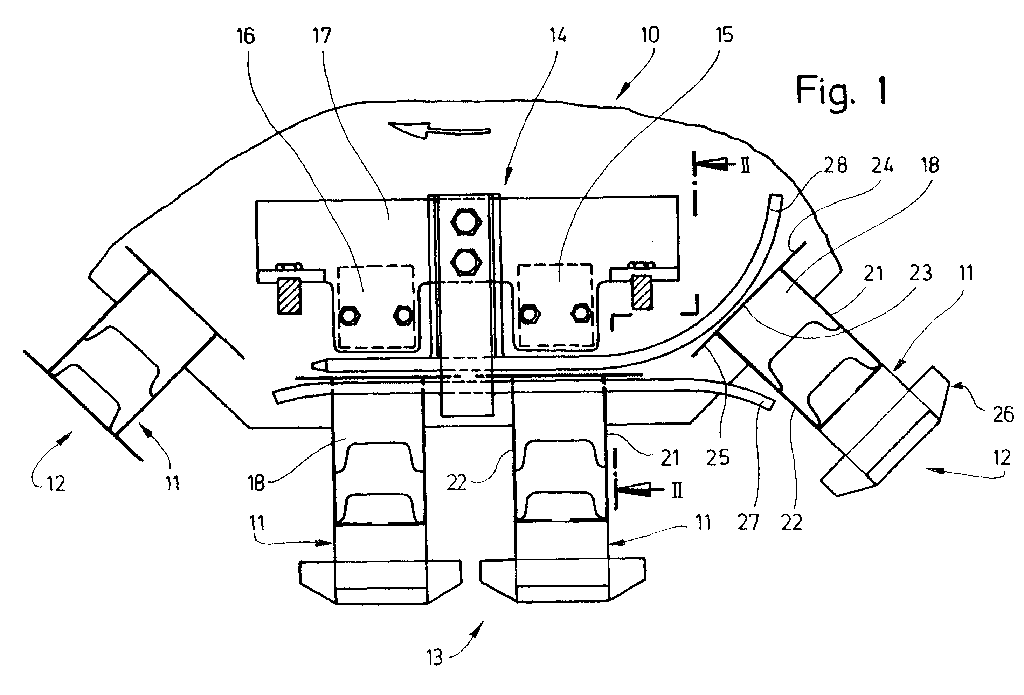

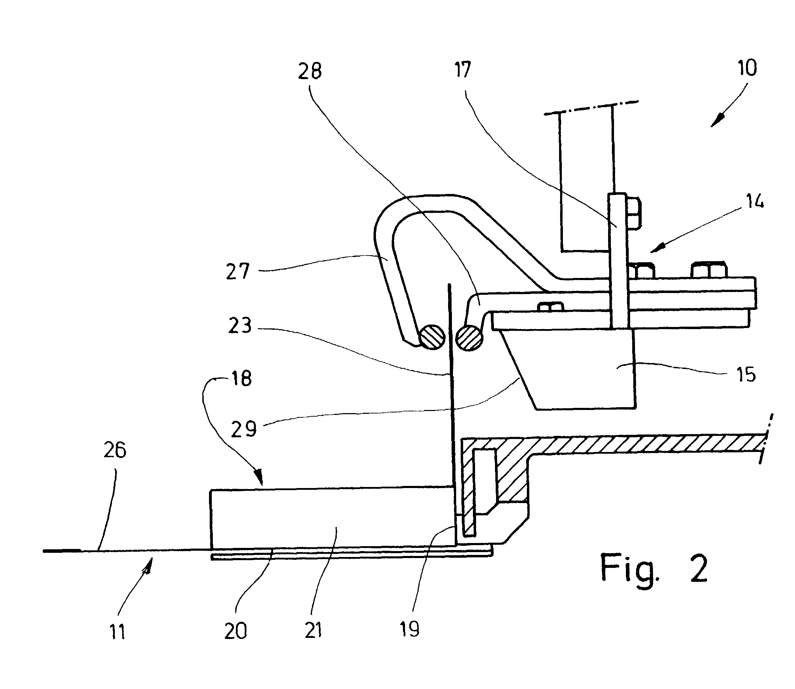

Fig. 1 und Fig. 2 zeigen ausschnittsweise einen Faltrevolver 10. Der Faltrevolver 10 dient dem taktweisen Falten eines Zuschnitts 11 in die Form einer herzustellenden Klappschachtel. Hierzu wird der Zuschnitt 11 taktweise einzelnen, längs eines Kreisbogens angeordneten Faltstationen 12 des Faltrevolvers 10 zugeführt.

In einem Bereich 13 zwischen zwei Faltstationen 12 des Faltrevolvers 10 ist eine Vorrichtung 14 zur Kontrolle der Zuschnitte 11 angeordnet. Die Vorrichtung 14 weist zwei nebeneinander angeordnete Sensoren 15, 16 auf. Die Sensoren 15, 16 sind als CCD-Kameras ausgebildet. Jeder Sensor 15, 16 ist zusammen mit einer in Fig. 1 und 2 nicht dargestellten Infrarot-Leuchtdiode in einem Gehäuse angeordnet. Dies gewährleistet, daß die Sensoren 15, 16 im Dunkeln betrieben werden können.

Die Sensoren 15, 16 sind an einer gemeinsamen höhenverstellbaren Sensorhalterung 17 angeordnet. Hierdurch ist sichergestellt, daß die Vorrichtung 14 an unterschiedliche Formate herzustellender Klappschachteln angepaßt werden kann.

Der um einen Zigarettenblock 18 teilgefaltete Zuschnitt 11 wird der Vorrichtung 14 in der in Fig. 2 dargestellten Position zugeführt. Hierbei sind lediglich Bodenwand 19, Rückwand 20 sowie innere Seitenlappen 21, 22 des Zuschnitts 11 in die richtige Faltposition um den Zigarettenblock 18 gebracht. Vorderwand 23 mit äußeren Seitenlappen 24, 25 sowie der gesamte Deckel 26 des Zuschnitts 11 befinden sich noch in ungefalteter Stellung.

Die Vorrichtung 14 dient nun der Kontrolle der noch ungefalteten, nach oben stehenden Vorderwand 23 des Zuschnitts 11. Führungselemente 27, 28 dienen hierbei der exakten Positionierung der Vorderwand 23 vor den Sensoren 15, 16.

Ein Beobachtungsfenster 29 der Sensoren 15, 16 ist schräg nach unten gerichtet, um Staubablagerungen auf dem Beobachtungsfenster 29 zu vermeiden.

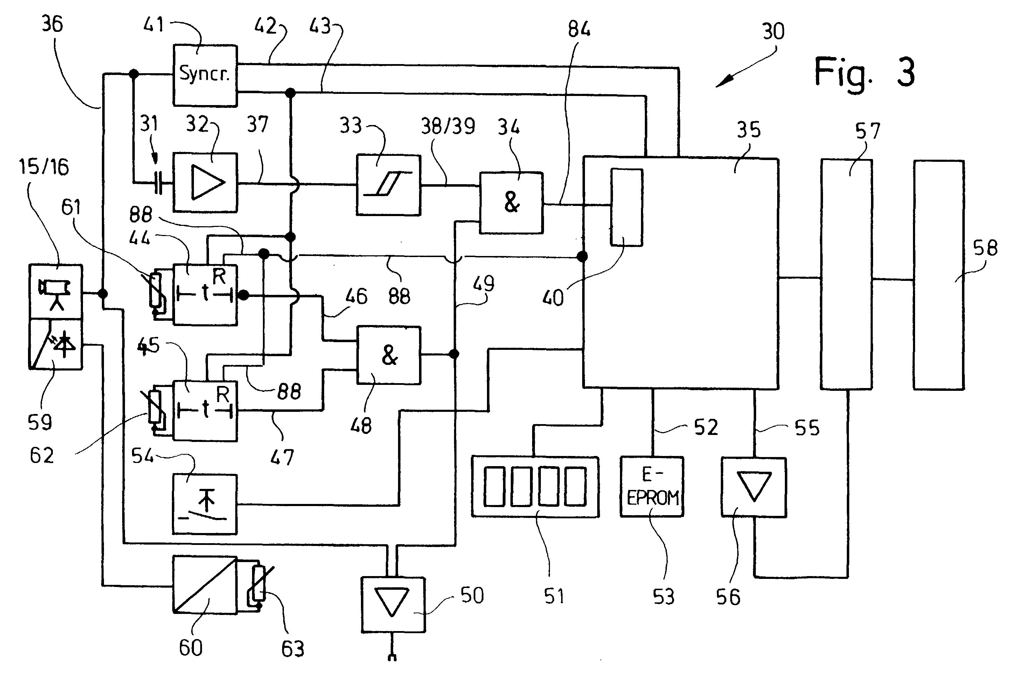

Ein Blockschaltbild 30 der erfindungsgemäßen Vorrichtung zur Kontrolle der Vorderwand 23 des Zuschnitts 11 zeigt Fig. 3. Der Sensor 15, 16 ist mit einer Filtereinheit 31 verbunden. Die Filtereinheit 31 ist dem Sensor 15, 16 in Signalflußrichtung nachgeschaltet. Die Filtereinheit 31 ist ein Kondensator und bewirkt eine Gleichspannungsentkopplung. Der Filtereinheit 31 ist ein Videoverstärker 32 nachgeschaltet. Der Videoverstärker 32 ist über einen Signalwandler 33 und ein Schaltelement 34 mit einer Auswerteeinheit 35 verbunden. Der Signalwandler 33 ist als Komparator mit Hysterese und das Schaltelement 34 als logisches "UND" ausgebildet. Bei der Auswerteeinheit 35 handelt es sich um einen Microcontroller. Demnach wird ein vom Sensor 15, 16 aufgenommenes Sensorsignal 36 nach einer Gleichspannungsentkopplung dem Videoverstärker 32 zugeführt. Ein durch die Gleichspannungsentkopplung gewonnenes und durch den Videoverstärker 32 verstärktes Kontursignal 37 wird durch den Signalwandler 33 in ein digitalisiertes Signal 38, nämlich in digitale Impulse 39, gewandelt. Diese werden sodann über das Schaltelement 34 der Auswerteeinheit 35, insbesondere einem in der Auswerteeinheit 35 integrierten Zähler 40, zugeführt.

Das Sensorsignal 36 wird neben der Filtereinheit 31 einer Synchronisationseinheit 41 zugeführt. Der Synchronisationseinheit 41 und Filtereinheit 31 wird demnach das gleiche Eingangssignal, nämlich das Sensorsignal 36, zugeführt. Die Synchronisationseinheit 41 filtert aus dem Sensorsignal 36 zwei Ausgangssignale, nämlich ein Bildanfangssignal 42 und ein Zeilenanfangssignal 43, heraus. Bildanfangssignal 42 und Zeilenanfangssignal 43 werden der Auswerteeinheit 35 zugeführt. Darüber hinaus wird das Zeilenanfangssignal 43 zwei Steuereinheiten 44, 45 zugeführt. Die Steuereinheiten 44, 45 sind als Zeitglieder ausgebildet. Ausgangssignale 46, 47 der Steuereinheiten 44, 45 werden einem Schaltelement 48 zugeführt, dessen Ausgangssignal 49 neben dem Signal 38 als Eingangssignale des Schaltelements 34 dienen. Das Schaltelement 48 ist ebenso wie das Schaltelement 34 als logisches "UND" ausgebildet.

Das Ausgangssignal 49 des Schaltelements 48 sowie das Sensorsignal 36 werden darüber hinaus einem Videoverstärker 50 als Eingangssignale zugeführt. Zur Visualisierung des Kontrollvorgangs kann am Videoverstärker 50 ein nicht dargestellter Monitor angeschlossen werden. Nicht auszuwertende Bereiche des abzulastenden Zuschnitts 11, auf die später noch detailliert eingegangen wird, stellen sich bei der Visualisierung auf dem Monitor dunkler dar als die auszuwertenden Bereiche des Zuschnitts 11.

Die über das Schaltelement 34 der Auswerteeinheit 35 zugeführten und von dieser ausgewerteten Impulse 39 des Signals 38 sind auf einem Display 51 ihrer Anzahl nach anzeigbar. In der Auswerteeinheit 35 werden die aufgezählten Impulse 39 mit einem Referenzwert 52 verglichen. Der Referenzwert 52 ist in einem externen Speicher 53 der Auswerteeinheit 35 gespeichert. Der im Speicher 53 gespeicherte Referenzwert 52 wird aus Referenzmessungen gebildet. Hierzu dient ein Betätigungselement 54, mit Hilfe dessen der Auswerteeinheit 35 signalisiert werden kann, daß es sich bei den aus dem Sensorsignal 36 gewonnenen Impulsen 39 um Referenzmeßwerte handelt, die zur Berechnung des Referenzwerts 52 verwendet werden sollen.

In Abhängigkeit des von der Auswerteeinheit 35 durchgeführten Vergleichs zwischen Referenzwert 52 und Anzahl von Impulsen 39 wird ein Ausgangssignal 55 erzeugt, welches über einen Verstärker 56 einer Maschinensteuerung 57 zugeführt wird. Die Maschinensteuerung 57 steht unmittelbar mit Elementen der Verpackungsmaschine in Verbindung, die bei einem entsprechenden Ausgangssignal 55 einen fehlerhaften Zuschnitt bzw. eine fehlerhafte Klappschachtel aus dem Produktionsfluß ausschließen. Die Maschinensteuerung 57 ist des weiteren mit einer zentralen Steuereinheit 58 verbunden. Die zentrale Steuereinheit 58 enthält Referenzwerte unterschiedlicher Zuschnitte. Bei einem Wechsel der herzustellenden Zigarettenpackung und damit bei einem Wechsel des zu verarbeitenden Zuschnitts kommunizieren die zentrale Steuereinheit 58 und die Maschinensteuerung 57 miteinander. Der entsprechende Referenzwert wird von der Steuereinheit 58 an die Maschinensteuerung 57 übergeben, diese übermittelt den Referenzwert an die Auswerteeinheit 35, wo dieser sodann im Speicher 53 abgespeichert wird.

Fig. 3 zeigt des weiteren das zusammen mit dem Sensor 15, 16 in einem Gehäuse angeordnete Beleuchtungselement 59. Das Beleuchtungselement 59 ist als Infrarot-Leuchtdiode ausgebildet. Das Beleuchtungselement gewährleistet, daß der Sensor 15, 16 im Dunklen betrieben werden kann. Die Leuchtintensität des Beleuchtungselements 59 ist über einen Regler 60 an das abzutastende Objekt anpaßbar. Dadurch ist gewährleistet, daß die Vorrichtung 14 unabhängig von den jeweiligen Lichtverhältnissen und dem jeweils abzutastenden Zuschnitt betrieben werden kann. Die Ausgestaltung des Beleuchtungselements 59 als Infrarot-Diode hat den Vorteil, daß dieselben gegenüber herkömmlichen Glühlampen eine hohe Lebensdauer aufweisen. Somit wird eine hohe Standzeit der erfindungsgemäßen Vorrichtung erreicht.

Die Steuereinheiten 44, 45 sowie der Regler 60 sind über diesen zugeordnete Trimmer 61, 62, 63 gegebenenfalls individuell an die konkrete Kontrolle eines Zuschnitts anpaßbar.

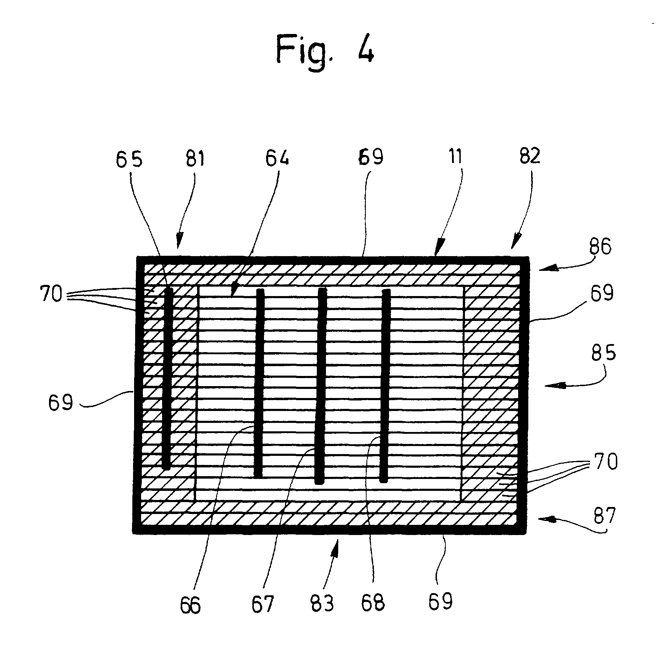

Details des erfindungsgemäßen Verfahrens werden nun im Zusammenhang mit Fig. 4 bis 9 erörtert. Ein von den Sensoren 15, 16 abzutastender Bereich 64 des Zuschnitts 11 trägt vier vertikal angeordnete Streifen 65, 66, 67, 68 sowie eine Umrandung 69. Die in Fig. 4 dargestellten, horizontal verlaufenden Linien 70 verdeutlichen die zeilenweise Abtastung des Bereichs 64 bzw. Zuschnitts 11 durch den Sensor 15, 16.

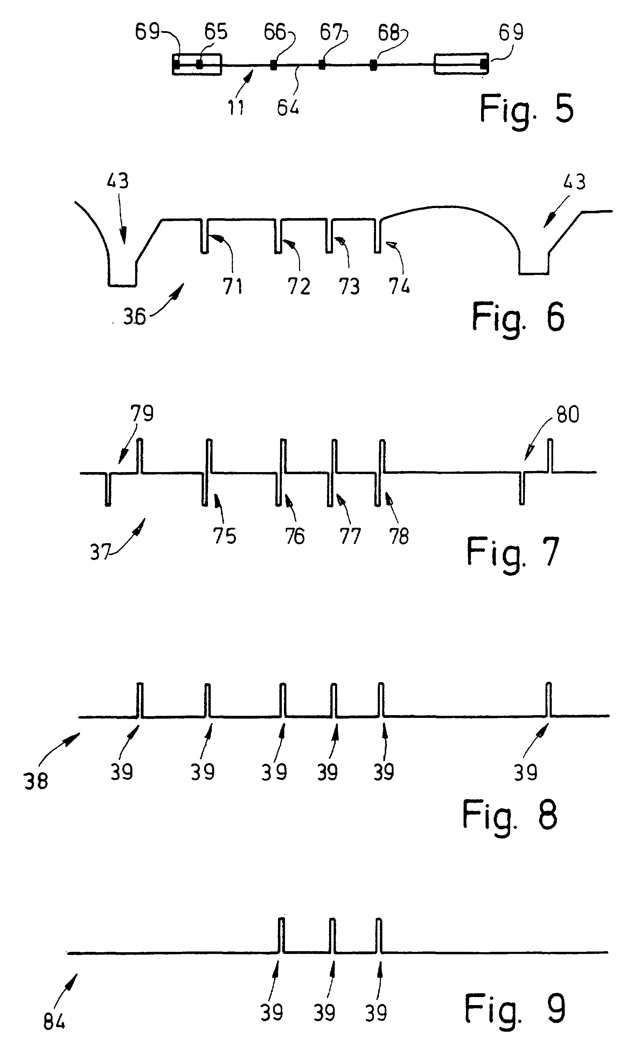

Bei der zeilenweisen Abtastung des Bereichs 64 durch den Sensor 15, 16 wird zeilenweise das Sensorsignal 36 gewonnen (Fig. 6). Das Sensorsignal 36 einer jeden Zeile enthält das Zeilenanfangssignal 43 sowie für jeden abgetasteten Streifen 65, 66, 67, 68 ein entsprechendes Signal 71, 72, 73, 74. Das Sensorsignal 36 gemäß Fig. 6 wird sodann mit Hilfe der als Kondensator ausgebildeten Filtereinheit 31 einer Gleichspannungsentkopplung unterzogen. Sodann wird das so gefilterte Signal über den Videoverstärker 32 verstärkt. Das so gewonnene Kontursignal 37 gibt lediglich den Konturenanteil des Bereichs 64 in Form von Spannungsspitzen 75, 76, 77, 78 wieder. Dies hat den Vorteil, daß die nachfolgende Signalauswertung nahezu unempfindlich gegenüber Helligkeitsschwankungen ist. Das Kontursignal 37 besteht demnach nur noch aus den Spannungsspitzen 75..78, die proportional den Streifen 65..68 und damit den Konturen des Bereichs 64 sind. Darüber hinaus enthält das Konturensignal 37 Spannungsspitzen 79, 80 infolge der jeweiligen Zeilenanfangssignale 43.

Das so gewonnene Konturensignal 37 wird sodann durch den als Komparator mit Hysterese-Kennlinie ausgebildeten Signalwandler 33 in das digitale Signal 38 gewandelt. Der Signalwandler 33 setzt jede im Kontursignal 37 enthaltene Spannungsspitze 75..80 in einen digitalen Impuls 39 um. Dieses digitale Signal 38 mit den Impulsen 39 wird sodann dem Schaltelement 34 zugeführt.

Neben der oben geschilderten Auswertung des Sensorsignals 36 wird dasselbe der Synchronisationseinheit 41 zugeführt. Die Synchronisationseinheit 41 filtert die Zeilenanfangssignale 43 einer jeden Zeile aus dem Sensorsignal 36 heraus. Die Zeilenanfangssignale 43 werden sodann in digitaler Signalform den als Zeitgliedern ausgebildeten Steuereinheiten 44, 45 zugeführt. Mit Hilfe der Steuereinheit 44 sowie der Steuereinheit 45 lassen sich vom Sensor 15, 16 aufgenommene Signale am Zeilenanfang sowie Zeilenende ausblenden. Die Steuereinheit 44 dient demnach dazu, einen ersten vertikalen Bereich 81 am Zeilenanfang des Sensorsignals 36 auszublenden. Die Steuereinheit 45 ermöglicht es, einen zweiten vertikalen Bereich 82 am Zeilenende des jeweiligen Sensorsignals 36 auszublenden. Somit wird ein vertikaler Abtastbereich 83 des Zuschnitt-Bereichs 64 festgelegt, der die eigentlich abzutastende und damit auszuwertende Information enthält.

Zusätzlich zum vertikalen Abtastbereich 83 läßt sich auch ein horizontaler Abtastbereich 85 einstellen. Der horizontale Abtastbereich 85 wird von der Auswerteeinheit 35 mit Hilfe des dieser zugeführten Bildanfangssignals 42 bestimmt. Hierzu übermittelt die Auswerteeinheit 35 ein Steuersignal 88 für die Ausblendung eines Bereichs 86 eines Bildanfangs und eines Bereichs 87 eines Bildendes an die Steuereinheiten 44, 45. Demnach werden mit Hilfe der Auswerteeinheit 35 und Steuereinheiten 44, 45 im Bereich 86 des Bildanfangs und im Bereich 87 des Bildendes komplette Zeilen aus der Auswertung ausgeblendet. Die Anzahl der in den Bereichen 86 und 87 auszublendenden Zeilen ist mit Hilfe eines nicht dargestellten Schalters einstellbar. Jeder Schalterstellung sind in der Auswerteeinheit 35 zwei Werte zugeordnet. Ein erster Wert bestimmt, ab welcher Zeile der Zähler 40 freigegeben wird, ein zweiter Wert bestimmt, ab welcher Zeile der Zähler 40 gesperrt wird. Somit werden nur diejenigen Impulse 39 ausgewertet, die innerhalb des horizontalen Abtastbereichs 85 liegen.

Über das den vertikalen Abtastbereich 83 und horizontalen Abtastbereich 85 festlegende Ausgangssignal 49, das neben dem digitalen Signal 38 dem Schaltelement 34 als Eingangssignal zugeführt wird, werden demnach die in die Abtastbereiche 83, 85 fallenden digitalen Impulse 39 aus dem Signal 38 herausgeblendet. Das so gewonnene Ausgangssignal 84 des Schaltelements 34 enthält demnach nur die zu den in den Abtastbereichen 83, 85 liegenden Streifen 66, 67, 68 gehörende Impulse 39. Diese werden der Auswerteeinheit 35 zur weiteren Erfassung und Auswertung zugeführt.

Der Zähler 40 der Auswerteeinheit 35 zählt die Impulse 39 des Ausgangssignals 84 und bringt den Zählerstand auf dem Display 51 zur Anzeige. Darüber hinaus vergleicht die Auswerteeinheit 35 den Zählerstand des Zählers 40 mit dem Referenzwert 52. Beim Überschreiten des Referenzwerts 52 wird das Ausgangssignal 55 gesetzt, das über den Verstärker 56 der Maschinensteuerung 57 zugeführt wird. Mit der Maschinensteuerung 57 in Verbindung stehende Elemente der Verpackungsmaschine sondern sodann den fehlerhaften Zuschnitt 11 aus dem Produktionsfluß aus.

Der Referenzwert 52 wird in einem "Doppel-Teach-Verfahren" ermittelt. Hierbei werden zwei Zählerwerte des Zählers 40 aufgenommen, nämlich ein Zählerwert für einen ordnungsgemäßen Zuschnitt 11 und ein Zählerwert für einen nicht ordnungsgemäßen Zuschnitt 11. Beide Zählerwerte werden hierbei über mehrere Messungen gemittelt. Der Zählerwert für den ordnungsgemäßen Zuschnitt 11 stellt demnach den ersten Teach dar, der Zählerwert für den nicht ordnungsgemäßen Zuschnitt den zweiten Teach. Die Auswerteeinheit 35 berechnet aus beiden Zählerwerten den im Speicher 53 abzuspeichernden Referenzwert 52. Das "Doppel-Teach-Verfahren" hat den Vorteil, daß bei der Zuschnittkontrolle ein großer Sicherheitsschaltabstand eingehalten werden kann. Somit können große Toleranzen zugelassen werden.

Das von der Synchronisationseinheit 41 aus dem Sensorsignal 36 herausgefilterte Bildanfangssignal 42 dient der Bestimmung eines Anfangs für einen Abtastzyklus. Wird demnach der Auswerteeinheit 35 ein Bildanfangssignal 42 übermittelt, so wird ein Zählzyklus gestartet. Der zuvor aufgenommene Zählerstand wird mit dem Referenzwert 52 verglichen und gegebenenfalls wird das Ausgangssignal 55 gesetzt.

Um zu gewährleisten, daß stets der gesamte abzutastende Bereich von der Auswerteeinheit 35 ausgewertet wird, muß der abzutastende Zuschnitt 11 immer für zwei Abtastzyklen vor dem Sensor 15, 16 verweilen. Bei dieser Verweildauer ist sichergestellt, daß stets der gesamte Zuschnitt 11 abgetastet wird.

Mit der oben geschilderten Vorrichtung sowie dem oben geschilderten Verfahren ist demnach der Zuschnitt 11 in bezug auf mehrere Eigenschaften überprüfbar. So können die Konturen des Randes des Zuschnitts 11 sowie der Oberfläche des Zuschnitts 11 abgetastet und ausgewertet werden. Aus den Konturen des Randes des Zuschnitts 11 ist überprüfbar, ob der Zuschnitt 11 in der Maschine die richtige Stellung bzw. Lage aufweist. Aus den Konturen der Oberfläche des Zuschnitts 11 ist überprüfbar, ob der Zuschnitt 11 auf seiner Oberfläche den für den herzustellenden Zigarettentyp richtigen Bedruck trägt.

Die erfindungsgemäße Vorrichtung sowie das erfindungsgemäße Verfahren können auch dazu verwendet werden, um auf einer fertiggefalteten Klappschachtel angebrachte Banderolen zu kontrollieren. Hierbei werden ebenfalls Konturen eines Randes und einer Oberfläche der Banderole abgetastet und die dabei ermittelten Impulse in der Auswerteeinheit 35 mit einem Referenzwert verglichen. Diesbezügliche Details können der Beschreibung zu Fig. 3 bis 9 entnommen werden. Zur Kontrolle der Banderolen ist die erfindungsgemäße Vorrichtung im Bereich einer Verpackungsmaschine zum Anbringen einer Außenumhüllung aus Zellglas, Polyfolie oder dergleichen angeordnet. Unmittelbar nach Verbinden der Klappschachtel mit der Außenumhüllung aus Zellglas oder dergleichen wird die Banderole kontrolliert. So kann ein Verrutschen der Banderole beim Anbringen der Außenumhüllung gegebenenfalls erfaßt werden. Zur Vermeidung von Wiederholungen wird auf die bereits geschilderte Kontrolle des Zuschnitts 11 verwiesen.

## Patentansprüche

1. Verfahren zur Kontrolle von Zuschnitten für Zigarettenpackungen oder von Banderolen auf Zigarettenpackungen, insbesondere auf Klappschachteln, wobei ein Zuschnitt (11), ein Teil desselben, eine Banderole oder ein Rand und/oder eine Oberfläche des Zuschnitts (11) oder der Banderole von einem Sensor (15, 16) abgetastet werden und ein dabei gewonnenes Sensorsignal (36) einer Auswerteeinheit (35) zugeführt wird, **dadurch gekennzeichnet, dass**
a) durch den Sensor (15, 16) Konturen eines Randes und/oder einer Oberfläche des Zuschnitts (11) oder der Banderole abgetastet werden,
b) aus dem hierbei erfaßten Sensorsignal (36) ein Kontursignal (37) gefiltert wird,
c) anschließend das Kontursignal (37) in digitale Impulse (39) gewandelt wird
d) und diese Impulse (39) in der Auswerteeinheit (35) mit einem Referenzwert (52) verglichen werden.

2. Verfahren nach Anspruch 1, **dadurch gekennzeichnet, daß** das Sensorsignal (36) zur Filterung desselben einer Gleichspannungsentkopplung unterzogen wird.

3. Verfahren nach Anspruch 1 oder 2, **dadurch gekennzeichnet, daß** das Sensorsignal (36) zusätzlich einer Synchronisationseinheit (41) zugeführt wird, die aus dem Sensorsignal (36) Synchronisationssignale, insbesondere Bildanfangssignale (42) und/oder Zeilenanfangssignale (43), herausfiltert.

4. Verfahren nach Anspruch 3, **dadurch gekennzeichnet, daß** die Bildanfangssignale (42) und/oder Zeilenanfangssignale (43) der Auswerteeinheit (35) zugeführt werden und daß mit den Bildanfangssignalen (42) ein erster, vorzugsweise horizontaler, Abtastbereich (85) festgelegt wird.

5. Verfahren nach einem oder mehreren der Ansprüche 1 bis 4, **dadurch gekennzeichnet, daß** die Zeilenanfangssignale (43) vorzugsweise zwei Steuereinheiten (45, 44) zugeführt werden und daß mit den den Steuereinheiten (44, 45) zugeführten Zeilenanfangssignalen (43) ein zweiter, vorzugsweise vertikaler, Abtastbereich (83) festgelegt wird.

6. Verfahren nach einem oder mehreren der Ansprüche 1 bis 5, **dadurch gekennzeichnet, daß** nur die in einen ersten Abtastbereich (85) und/oder einen zweiten Abtastbereich (83) fallenden Impulse (39) ausgewertet und mit dem Referenzwert (52) verglichen werden.

7. Verfahren nach einem oder mehreren der Ansprüche 1 bis 6, **dadurch gekennzeichnet, daß** der Referenzwert (52) aus mehreren Referenzmessungen ermittelt und in der Auswerteeinheit (35) gespeichert wird und daß bei Überschreiten oder Unterschreiten des Referenzwerts (52) ein Ausgangssignal (55) erzeugt und dieses einer Maschinensteuerung (57) zugeführt wird.

8. Verfahren nach einem oder mehreren der Ansprüche 1 bis 7, **dadurch gekennzeichnet, daß** mit dem der Auswerteeinheit (35) zugeführten Bildanfangssignal (42) ein Abtastzyklus gestartet wird.

9. Vorrichtung zur Kontrolle von Zuschnitten für Zigarettenpackungen oder von Banderolen auf Zigarettenpackungen, insbesondere auf Klappschachteln, mit einem Sensor (15, 16) und einer Auswerteeinheit (35), **gekennzeichnet durch** eine Filtereinheit (31), die dem Sensor (15, 16), der Konturen eines Randes und/oder einer Oberfläche des Zuchnitts (11) oder der Banderolle abtastet, in Signalflußrichtung nachgeschaltet ist und die aus einem vom Sensor (15, 16) ermittelten Sensorsignal (36) ein Kontursignal (37) herausfiltert, und **durch** einen Signalwandler (33), der jeweils in Signalflußrichtung der Filtereinheit (31) nachgeschaltet und der Auswerteeinheit (35) vorgeschaltet ist und der das Kontursignal (37) in Impulse (39) wandelt, die in der Auswerteeinheit (35) ausgewertet werden.

10. Vorrichtung nach Anspruch 9, **dadurch gekennzeichnet, daß** die Filtereinheit (31) als Kondensator und der Signalwandler (33) als Komparator mit Hysteresekennlinie ausgebildet ist.

11. Vorrichtung nach Anspruch 9 oder 10, **gekennzeichnet durch** eine Synchronisationseinheit (41), die dem Sensor (15, 16) nachgeschaltet ist, derart, daß Synchronisationseinheit (41) und Filtereinheit (31) dasselbe Eingangssignal (36) zuführbar ist, wobei die Synchronisationseinheit (41) aus dem Sensorsignal (36) Synchronisationssignale, insbesondere Bildanfangssignale (42) und Zeilenanfangssignale (43), herausfiltert.

12. Vorrichtung nach einem oder mehreren der Ansprüche 9 bis 11, **gekennzeichnet durch** vorzugsweise zwei Steuereinheiten (44, 45), die einerseits der Synchronisationseinheit (41) nachgeschaltet und andererseits untereinander parallel geschaltet sind, wobei die Ausgänge der Steuereinheiten (44, 45) **durch** ein Schaltelement (48) miteinander verbunden sind und wobei die Steuereinheiten (44, 45) mit Hilfe der Synchronisationssignale einen horizontalen und vertikalen Abtastbereich (83, 85) festlegen.

13. Vorrichtung nach einem oder mehreren der Ansprüche 9 bis 12, **dadurch gekennzeichnet, daß** zwischen Signalwandler (33) und Auswerteeinheit (35) ein zweites Schaltelement (34) angeordnet ist, dessen Eingänge mit den Ausgängen des Signalwandlers (33) und Schaltelements (48) verbunden ist.

14. Vorrichtung nach einem oder mehreren der Ansprüche 9 bis 13, **dadurch gekennzeichnet, daß** dieselbe zur Kontrolle von Zuschnitten zwischen zwei Faltstationen (12) eines Faltrevolvers (10) angeordnet ist.

15. Vorrichtung nach einem oder mehreren der Ansprüche 9 bis 13, **dadurch gekennzeichnet, daß** dieselbe zur Kontrolle von Banderolen im Bereich einer Verpackungsmaschine zum Anbringen einer Außenumhüllung aus Zellglas oder dergleichen angeordnet ist.

## Claims

1. Process for inspecting blanks for cigarette packs or wrappers on cigarette packs, in particular on hinge-lid boxes, a blank (11), a part of the same, or a wrapper or an edge and/or a surface of the blank (11) or of the wrapper being scanned by a sensor (15, 16), and a sensor signal (38) obtained in the process being supplied to an evaluation unit (35), **characterized in that**
a) by means of the sensor (15, 16), contours of an edge and/or a surface of the blank (11) or of the wrapper are scanned,
b) a contour signal (37) is filtered out of the sensor signal (36) registered hereby,
c) the contour signal (37) is then converted into digital pulses (39)
d) and these pulses (39) are compared with a reference value (52) in the evaluation unit (35).

2. Process according to Claim 1, **characterized in that** the sensor signal (36) is subjected to DC decoupling in order to filter the same.

3. Process according to Claim 1 or 2, **characterized in that** the sensor signal (36) is additionally supplied to a synchronization unit (41), which filters synchronization signals, in particular image start signals (42) and/or line start signals (43), out of the sensor signal (36).

4. Process according to Claim 3, **characterized in that** the image start signals (42) and/or line start signals (43) are supplied to the evaluation unit (35), and **in that** by using the image start signals (42), a first, preferably horizontal, scanning area (85) is defined.

5. Process according to one or more of Claims 1 to 4, **characterized in that** the line start signals (43) are preferably supplied to two control units (45, 44), and **in that** by using the line start signals (43) supplied to the control units (44, 45), a second, preferably vertical, scanning area (83) is defined.

6. Process according to one or more of Claims 1 to 5, **characterized in that** only the pulses (39) that fall within a first scanning area (85) and/or a second scanning area (83) are evaluated and compared with the reference value (52).

7. Process according to one or more of Claims 1 to 6, **characterized in that** the reference value (52) is determined from a plurality of reference measurements and stored in the evaluation unit (35), and **in that**, if a measurement exceeds or falls below the reference value (52), an output signal (55) is generated and the latter is supplied to a machine control system (57).

8. Process according to one or more of Claims 1 to 7, **characterized in that** by using the image start signal (42) supplied to the evaluation unit (35), a scanning cycle is started.

9. Apparatus for inspecting blanks for cigarette packs or wrappers on cigarette packs, in particular on hinge-lid packs, having a sensor (15, 16) and an evaluation unit (35), **characterized by** a filter unit (31), which, in the signal flow direction, is connected downstream of the sensor (15, 16) that scans the contours of an edge and/or a surface of the blank (11) or of the wrapper, and which filters a contour signal (37) out of the sensor signal (36) determined by the sensor (15, 16), and by a signal converter (33), which, in each case in the signal flow direction, is connected downstream of the filter unit (31) and upstream of the evaluation unit (35), and which converts the contour signal (37) into pulses (39) which are evaluated in the evaluation unit (35).

10. Apparatus according to Claim 9, **characterized in that** the filter unit (31) is designed as a capacitor and the signal converter (33) as a comparator with a hysteresis characteristic curve.

11. Apparatus according to Claim 9 or 10, **characterized by** a synchronization unit (41), which is connected downstream of the sensor (15, 16) in such a way that the same input signal (36) can be supplied to the synchronization unit (41) and filter unit (31), the synchronization unit (41) filtering synchronization signals, in particular image start signals (42) and line start signals (43), out of the sensor signal (36).

12. Apparatus according to one or more of Claims 9 to 11, **characterized by** preferably two control units (44, 45), which, firstly, are connected downstream of the synchronization unit (41) and, secondly, are connected in parallel with each other, the outputs from the control units (44, 45) being connected to each other by a switching element (48), and the control units (44, 45) defining a horizontal and vertical scanning area (83, 85) with the aid of the synchronization signals.

13. Apparatus according to one or more of Claims 9 to 12, **characterized in that** a second switching element (34), whose inputs are connected to the outputs of the signal converter (33) and switching element (48), is arranged between the signal converter (33) and evaluation unit (35).

14. Apparatus according to one or more of Claims 9 to 13, **characterized in that** the said apparatus is arranged to inspect blanks between two folding stations (12) of a folding turret (10).

15. Apparatus according to one or more of Claims 9 to 13, **characterized in that** the said apparatus is arranged to inspect wrappers in the area of a packaging machine for the application of an outer covering of cellophane or the like.

## Revendications

1. Procédé de contrôle de découpes pour des paquets de cigarettes ou de banderoles sur des paquets de cigarettes, en particulier sur des boîtes à couvercle basculant, dans lequel une découpe (11), une partie de celle-ci, une banderole ou un bord et/ou une surface de la découpe (11) ou de la banderole est exploré par un capteur (15, 16) et un signal de capteur (36) alors obtenu est envoyé à un dispositif d'exploitation (35), **caractérisé par le fait que**
a) le capteur (15, 16) explore les contours d'un bord et/ou d'une surface de la découpe (11) ou de la banderole,
b) à partir du signal de capteur (36) alors saisi est filtré un signal de contours (37),
c) ensuite, le signal de contours (37) est converti en impulsions numériques (39)
d) et ces impulsions numériques (39) sont comparées dans le dispositif d'exploitation (35) à une valeur de référence (52).

2. Procédé selon la revendication 1, **caractérisé par le fait que** le signal de capteur (36) est, pour le filtrage de celui-ci, soumis à un découplage de tension continue.

3. Procédé selon l'une des revendications 1 et 2, **caractérisé par le fait que** le signal de capteur (36) est en plus envoyé à un dispositif de synchronisation (41) qui extrait par filtrage, du signal de capteur (36), des signaux de synchronisation, en particulier des signaux de début d'image (42) et/ou des signaux de début de ligne (43).

4. Procédé selon la revendication 3, **caractérisé par le fait que** les signaux de début d'image (42) et/ou les signaux de début de ligne (43) sont envoyés au dispositif d'exploitation (35), et qu'avec les signaux de début d'image (42) est fixée une première zone d'exploration de préférence horizontale (85).

5. Procédé selon une ou plusieurs des revendications 1 à 4, **caractérisé par le fait que** les signaux de début de ligne (43) sont envoyés de préférence à deux dispositifs de commande (45, 44), et qu'avec les signaux de début de ligne (43) envoyés aux dispositifs de commande (44, 45) est fixée une deuxième zone d'exploration de préférence verticale (83).

6. Procédé selon une ou plusieurs des revendications 1 à 5, **caractérisé par le fait que** seules les impulsions (39) qui tombent dans une première zone d'exploration (85) et/ou dans une deuxième zone d'exploration (83) sont exploitées et comparées à la valeur de référence (52).

7. Procédé selon une ou plusieurs des revendications 1 à 6, **caractérisé par le fait que** la valeur de référence (52) est déterminée à partir de plusieurs mesures de référence et est mise en mémoire dans le dispositif d'exploitation (35), et qu'en cas de dépassement ou de soupassement de la valeur de référence (52), un signal de sortie (55) est produit et envoyé à une commande de machine (57).

8. Procédé selon une ou plusieurs des revendications 1 à 7, **caractérisé par le fait qu'**avec le signal de début d'image (42) envoyé au dispositif d'exploitation (35) est lancé un cycle d'exploration.

9. Dispositif de contrôle de découpes pour des paquets de cigarettes ou de banderoles sur des paquets de cigarettes, en particulier sur des boîtes à couvercle basculant, comportant un capteur (15, 16) et un dispositif d'exploitation (35), **caractérisé par** un dispositif de filtrage (31) qui est monté dans la direction du flux de signal après le capteur (15, 16), qui explore les contours d'un bord et/ou d'une surface de la découpe (11) ou de la banderole, et qui extrait par filtrage un signal de contours (37) du signal (36) déterminé par le capteur (15, 16), et par un convertisseur de signal (33) qui est monté dans la direction du flux de signal après le dispositif de filtrage (31) et avant le dispositif d'exploitation (35) et qui convertit le signal de contours (37) en impulsions (39) qui sont exploitées dans le dispositif d'exploitation (35).

10. Dispositif selon la revendication 9, **caractérisé par le fait que** le dispositif de filtrage (31) est constitué d'un condensateur et le convertisseur de signal (33) constitué d'un comparateur à caractéristique d'hystérésis.

11. Dispositif selon l'une des revendications 9 et 10, **caractérisé par** un dispositif de synchronisation (41) qui est monté après le capteur (15, 16) de façon telle qu'au dispositif de synchronisation (41) et au dispositif de filtrage (31) puisse être envoyé le même signal d'entrée (36), le dispositif de synchronisation (41) extrayant par filtrage, du signal de capteur (36), des signaux de synchronisation, en particulier des signaux de début d'image (42) et des signaux de début de ligne (43).

12. Dispositif selon une ou plusieurs des revendications 9 à 11, **caractérisé par** de préférence deux dispositifs de commande (44, 45) qui sont montés d'une part après le dispositif de synchronisation (41) et d'autre part en parallèle, les sorties de ces dispositifs de commande (44, 45) étant reliées par un élément de commutation (48), et ces dispositifs de commande (44, 45) fixant à l'aide des signaux de synchronisation une zone d'exploration horizontale (85) et une zone d'exploration verticale (83).

13. Dispositif selon une ou plusieurs des revendications 9 à 12, **caractérisé par le fait qu'**entre le convertisseur de signal (33) et le dispositif d'exploitation (24) est monté un deuxième élément de commutation (34) dont les entrées sont reliées aux sorties du convertisseur de signal (33) et de l'élément de commutation (48).

14. Dispositif selon une ou plusieurs des revendications 9 à 13, **caractérisé par le fait qu'**il est monté pour le contrôle de découpes entre deux postes de pliage (12) d'un revolver de pliage (10).

15. Dispositif selon une ou plusieurs des revendications 9 à 13, **caractérisé par le fait qu'**il est monté pour le contrôle de banderoles dans la zone d'une empaqueteuse pour l'application d'une enveloppe extérieure en cellophane ou matière analogue.
